# EUROPEAN PATENT APPLICATION

(11) **EP 3 214 133 A1**
(43) Date of publication of application: **06.09.2017**
(21) Application number: 15854455.1
(22) Date of filing: 22.05.2015
(51) Int. Cl.: C08L 67/02, C08J 3/20, A01K 73/00

(54) **BIODEGRADABLE RESIN COMPOSITION AND FISHING NET PRODUCED FROM SAME**

(30) Priority: 29.10.2014 KR 20140148270
(71) Applicant: LOTTE Fine Chemical Co., Ltd., Ulsan, 44714 (KR)
(72) Inventor: KIM, Min Kyoung, Seoul 158-755 (KR); YUN, Ki Chull, Suwon-si Gyeonggi-do 443-817 (KR); KANG, Gyung Don, Daejeon 305-768 (KR); AHN, Ji Soo, Daejeon 305-744 (KR); KANG, Sang Mi, Daejeon 302-829 (KR); KIM, Ye Jin, Seoul 130-100 (KR); YANG, Mi Hwa, Miryang-si Gyeongsangnam-do 627-805 (KR); BYUN, Kil Seuk, Yongin-si Gyeonggi-do 448-519 (KR)
(74) Representative: Kador & Partner
(86) International application number: PCT/KR2015/005149
(87) International publication number: WO 2016/068432

(57) **Abstract**

The present invention relates to a biodegradable resin having outstanding colouring properties, and provides a resin composition which does not give rise to problems such as reduced strength due to colouration. The composition of the present invention, suggests that a PBSAT resin is used as a biodegradable resin, and colouration is performed with same. Also, at this time, the colourant can be mixed in the form of masterbatch. In the present invention, the resin composition is used in the production of various products, in particular monofilament yarn produced via spinning and a fishing net manufactured from same is provided. Fishing nets such as the above are advantageous in that such fishing nets can be realized in various colours in accordance with customer requirements and satisfy the required strength and, after use, degrade naturally in seawater and so do not give rise to problems like environmental pollution.

## Description

### [Technical Field]

The present invention relates to a biodegradable resin composition, and provides a colored biodegradable resin composition which is easily colored and does not cause problems such as a decrease in strength and deformation due to coloration. Furthermore, the present invention relates to a biodegradable product capable of being implemented in various colors.

### [Background Art]

The pollution of the coast and damage by ghost fishing, which are caused by waste fishing equipment, may be minimized by applying a material capable of being naturally degraded in seawater to a fishing net and fishing equipment. Therefore, the development of a biodegradable resin for a fishing net capable of simultaneously securing strength, flexibility, and the degree of elongation recovery required for the fishing net, has been conducted. A poly(butylene succinate) (PBS) resin or a poly(butylene adipate-co-terephthalate) (PBAT) resin has been used as a representative biodegradable resin.

However, the resins have a poor tinting strength or cause problems such as a decrease in strength and deformation due to coloration even when the resins are colored. Therefore, when a fishing net requires various colors, there is no choice but to replace with nylon and the like, which is a material having no biodegradability. That is, a fishing net has been prepared using a combination of a biodegradable resin and a general non-biodegradable resin. Since only a fishing net discarded after use among these fishing nets is partially biodegraded, problems that an existing fishing net has, such as environmental pollution caused by the remaining nondegraded materials, still remain unsolved.

Therefore, research on the development of a new resin or a resin composition, which has an excellent coloration effect and does not cause problems such as a decrease in strength due to coloration, and thus is used for a fishing net requiring coloration, which is composed of only a biodegradable material, has been continuously conducted.

### [Disclosure]

### [Technical Problem]

It is an object of the present invention to provide a biodegradable resin composition which has an excellent coloration effect and does not cause problems such as a decrease in strength due to coloration.

Specifically, the present invention provides a biodegradable resin composition. Among various products processed from the biodegradable resin, particularly, colored monofilament yarn manufactured by spinning a resin has satisfactory properties such as strength required for a fishing net and the like.

Therefore, it is an object of the present invention to provide a biodegradable resin composition having an excellent coloration effect, various types of a molded product prepared therefrom, particularly, monofilament yarn which is capable of being implemented in various colors and being used to manufacture a fishing net in accordance with customer requirements, and a fishing net which does not cause problems such as environmental pollution because the product is naturally degraded by microorganisms in seawater after use and is capable of being implemented in various colors according to the use.

### [Technical Solution]

The present invention provides a biodegradable resin composition, which includes a colorant at 0.005 to 0.015 parts by weight with respect to 100 parts by weight of a poly(butylene succinate-co-adipate-co-terephthalate) (PBSAT) resin.

Preferably, the colorant is one or more selected from the group consisting of phthalocyanine green, carbon black, phthalocyanine blue, iron oxides, and triphenylmethane.

Preferably, the colorant is provided in the form of a masterbatch having a structure that includes a colorant and a biodegradable resin which covers the colorant.

Preferably, the PBSAT resin has a molecular weight (Mw) in a range of 100,000 to 200,000.

Preferably, the PBSAT resin includes a residue of succinic acid:adipic acid:phthalic acid in a range of 70 to 90:5 to 15:5 to 15 mol%.

The present invention provides monofilament yarn manufactured by spinning the resin composition.

In addition, the present invention provides a fishing net manufactured using a part or all of the spun monofilament yarn.

### [Advantageous Effects]

According to the present invention, a material which has biodegradability, exhibits an excellent coloration effect, and does not cause problems such as a decrease in strength due to coloration can be provided. Since a resin composition according to the present invention is capable of being implemented in various colors, has excellent mechanical strength, and does not cause problems such as deformation, a final product can have satisfactory required properties and can be implemented in desired color. Therefore, the resin composition can be advantageously used to manufacture a product requiring biodegradability.

In particular, the present invention can provide a biodegradable fishing net which has satisfactory color in accordance with customer preference and strength required for a fishing net when the resin composition is used to manufacture a fishing net, and is naturally degraded in seawater after use.

### [Modes of the Invention]

The present invention provides a biodegradable resin composition which is a new material that has biodegradability, exhibits an excellent coloration effect, and does not cause problems such as a decrease in strength due to coloration, wherein the biodegradable resin composition includes a colorant at 0.005 to 0.015 parts by weight with respect to 100 parts by weight of a PBSAT resin.

A PBSAT resin included in the resin composition is an aliphatic/aromatic copolyester prepared by using, as base materials, 1,4-butanediol as an aliphatic glycol, and dicarboxylic acids, for example, succinic acid and adipic acid which are aliphatic components and dimethyl terephthalate (DMT) which is an aromatic component. The PBSAT resin includes multiple dicarboxylic acid residue components unlike a poly(butylene succinate) (PBS) resin including one dicarboxylic acid residue or a poly(butylene adipate-co-terephthalate) (PBAT) resin including two dicarboxylic acid residues. In the crystal structure of such resins including a combination of multiple components, an amorphous (non-crystalline) region occupies a considerable portion due to co-crystallization.

A colorant used for coloration in the present invention is considered to be mainly present in the amorphous region of the biodegradable resin. Accordingly, it is understood that, as crystallinity increases, a coloration effect decreases, on the other hand, as an amorphous region increases, a coloration effect increases. In addition, since a colorant present in a crystalline region results in a decrease in strength of a resin, strength required for a final obtained material may be secured by increasing a proportion of an amorphous region in a structure of a resin.

Therefore, according to the above requirement, the present invention proposes using the PBSAT resin, which is a resin of a structure having a high proportion of an amorphous region, as a base resin of a colored resin composition.

The PBSAT resin, which is a biodegradable resin, is designed to satisfy the above condition, and thus even when a small amount of a colorant is used, the resin exhibits an excellent coloration effect as well as biodegradability. In addition, coloration of an existing resin results in significantly degraded properties, particularly, degraded strength, and in order to solve problems caused by degraded strength, a material that is not biodegraded is added upon the manufacture of a product, while the resin of the present invention maintains an excellent coloration effect and properties required for manufacturing products. Therefore, applications of the resin composition according to the present invention may be beneficially expanded to manufacture of various products.

A colorant included in the resin composition according to the present invention may be used without limitation as long as a colorant is generally used to color a resin. For example, phthalocyanine green, carbon black, phthalocyanine blue, iron oxides, triphenylmethane, or the like may be selected according to desired color, and a combination of one or more colorants may also be used.

In the present invention, exemplary embodiments in which a masterbatch is used as a material for providing a colorant to a composition are suggested. It is not preferable that a composition be colored using a colorant for a resin by a method of directly adding the colorant to a composition because compatibility (wettability) at an interface with a resin is poor due to a generally used paste-type colorant in the form of a metal particle, and thus when mixed with a resin, a colorant exhibits poor dispersibility in a resin. Also, since a paste-type colorant used as a general coating material contains an organic solvent, when the colorant is used without change in combination with a resin, an organic solvent component remains in a resin. Therefore, in the present invention, a masterbatch, which is composed of a metal particle of a colorant covered with a coating material including a biodegradable resin and pelletized into a granule material capable of easily flowing, is used to color a resin. In this case, a biodegradable resin is preferably used as a material covering the colorant in terms of biodegradability of a final obtained resin composition.

The masterbatch may be prepared even by any known preparation method. For example, the above-described colorant and biodegradable resin are thermally mixed in an extruder. The mixing process is preferably performed at a heating temperature of 120 to 180 °C. A solvent component included in a paste-type colorant is removed by these heating and mixing processes. Subsequently, a material uniformly mixed by the mixing process is prepared into a pellet-type material substantially having a solid content of 100% by a disc pelletizer to prepare a masterbatch.

A masterbatch preferably includes a colorant at 0.5 to 5 % by weight. This is because when a colorant is included at less than 0.5 % by weight, a sufficient coloration effect is not exhibited and when a colorant is included at greater than 5 % by weight, a colorant is not completely mixed with a resin due to a decrease in strength of a masterbatch, and thus problems in handling such as a masterbatch is not pelletized and the like occur. Meanwhile, in the present invention, when a masterbatch is used as a material for providing a colorant, the masterbatch is used in such an amount that a proportion of a colorant to a resin is within the above-described range, as in examples to be described.

A PBSAT resin preferably includes a residue of succinic acid:adipic acid:phthalic acid of a dicarboxylic acid residue in a range of 70 to 90:5 to 15:5 to 15 mol%. Therefore, in order to prepare a PBSAT resin, dicarboxylic acids composed in the above proportion and 1,4-butanediol as an aliphatic glycol are esterified at a molar ratio of 1:1.2 to 2.0 and then polycondensed. As a reactor and reaction conditions used in the reaction, any method used in preparation of an existing biodegradable resin such as PBS and the like may be used without limitation.

For example, in order to polymerize the PBSAT resin, phthalic acid, for example, dimethyl terephthalate, and 1,4-butanediol, which are base materials, are mixed with a metallic catalyst and a thermal stabilizer, and then the mixture is transesterified under conditions of temperature of 180 to 200 °C for approximately 0.5 to 1 hour to release methanol (CH₃OH) in an amount corresponding to a theoretical yield. When methanol is released in an amount corresponding to the theoretical yield, the temperature is raised to 200 to 220 °C, adipic acid and succinic acid are further added, and then an esterification reaction is performed for approximately 1 to 2 hours to form oligomers. In this case, water is released in an amount corresponding to a theoretical yield. When water is released in an amount corresponding to approximately 95% of the theoretical yield, a metallic catalyst and a coloring agent, etc. are added and the temperature is raised to approximately 240 to 250 °C. Then, a polycondensation reaction is performed under conditions of a high-degree vacuum of 1 Torr or less for approximately 2 to 3 hours to remove an unreacted base material (unreacted monomer), an oligomer having a low molecular weight, and byproduct water. As a result, a biodegradable polyester resin having a high molecular weight may be obtained.

Next, a resin composition capable of being prepared into a resin molded product is preferably prepared by mixing the PBSAT resin thus prepared and the masterbatch. In this case, the resin and the colorant are mixed in a proportion of 0.005 to 0.015 parts by weight of the colorant with respect to 100 parts by weight of the PBSAT resin. When the colorant is included at less than 0.005 parts by weight, a composition exhibits incomplete coloration or local instability upon secondary molding of a composition, while there is a limitation in improving strength of a product when the colorant is included at greater than 0.015 parts by weight, and thus properties of a composition are influenced. In the mixing process, a device equipped with an impeller inside a mixing tank may be used in an example. The resin and the masterbatch are added in the tank in a predetermined proportion and uniformly mixed.

Meanwhile, in order to improve properties of monofilament yarn formed from the colored resin composition according to an example, additives such as an antioxidant, a UV stabilizer, a dispersant, and the like may be further added in the mixing tank. Bis(2,6-di-tert-butyl-4-methylphenyl)pentaerythritol-di-phosphite, bis(2,4-di-tert-butylphenyl)pentaerythritol-di-phosphite, 1,3,5-trimethyl-2,4,6-tris(3,5-di-tert-butyl-4-hydroxybenzyl)benzene, 1,6-bis[3-(3,5-di-tert-butyl-4-hydroxyphenyl)propionamido]hexane, 1,6-bis[3-(3,5-di-tert-butyl-4-hydroxyphenyl)propionamido]propane, tetrakis[methylene(3,5-di-tert-butyl-4-hydroxyhydrocinnamate)]methane, and the like may be used as an antioxidant. Hydroxybenzophenone, hydroxyphenylbenzotriazole, or hindered amines may be used as a UV stabilizer. Glycerin diacetate monolaurate, glycerin diacetate monocaprate, polyglycerol acetic ester, dimethyl adipate, dibutyl adipate, triethylene glycol diacetate, methyl acetylricinoleate, acetyl tributyl citrate, polyethylene glycol, dibutyl diglycol succinate, bis(butyl diglycol)adipate, bis(methyl diglycol)adipate, and the like may be used as a dispersant. These additives may be included at 0.2 to 0.5 parts by weight with respect to 100 parts by weight of the PBSAT resin.

Next, various types of products may be manufactured by molding the resin composition mixed in the mixing tank through a conventional known molding method such as injection molding, extrusion molding, blow molding, and the like.

In addition, in exemplary embodiments, the present invention provides monofilament yarn obtained by adding a resin composition in an extruder to prepare a primary molded product for a spinning process in the form of a pellet or a chip and then preparing monofilament yarn as a secondary molded product from the primary molded product, or monofilament yarn obtained by directly spinning a resin composition. The spinning is performed by spinning a melt mixture using a melt spinning device, for example, a melt spinning device having 40 spinning holes at 200 to 220 °C. In this case, a drawing ratio is set in a range of 7.0 to 7.7. Denier (diameter or diameter number) of manufactured monofilament yarn may be determined according to the use, and thus is included within the scope of the present invention without limitation.

Furthermore, the present invention provides a fishing net manufactured from the monofilament yarn using a generally widely used netting machine (machine for weaving a net). The fishing net may be composed of only monofilament yarn according to the present invention or may partially include monofilament yarn according to the present invention. Also, the fishing net, which exhibits various colors by a colorant selected in accordance with customer need or preference and has preferable strength, is a biodegradable fishing net which is naturally degraded in seawater after use.

Hereinafter, the present invention will be described with reference to examples. However, the examples are only examples to help understanding of the invention and the invention is not limited thereto.

### Example 1

### (1) Preparation of PBSAT resin

63.1 kg of dimethyl terephthalate (DMT) (325.0 mol) and 702 kg of 1,4-butanediol (7800.0 mol) were added as base materials in a reactor (5 t) equipped with a condenser, a nitrogen inlet pipe, and a stirrer, and 325.0 g of trimethyl phosphate and 130 g of triphenyl phosphate as a thermal stabilizer and 4550.0 g of titanium(IV) butoxide as a catalyst were further added in the reactor, and then a transesterification reaction was performed under conditions of temperature of 200 °C for 1 hour to release methanol (CH₃OH) in an amount corresponding to a theoretical yield. When methanol was released in an amount of 22.1 L corresponding to a theoretical yield, the temperature was raised to 220 °C, 47.5 kg of adipic acid (325.0 mol) and 690 kg of succinic acid (5850.0 mol) were further added, and then an esterification reaction was performed for 1 hour to form oligomers. In this case, water was released in an amount corresponding to a theoretical yield. When water was released in an amount corresponding to approximately 95% of a theoretical yield (2220 L), 325 g of titanium(IV) butoxide as a subsequent catalyst and 2600 g of cobalt acetate as a coloring agent were added and the temperature was raised to 240 °C. Then, a polycondensation reaction was performed under conditions of a high-degree vacuum of 1 Torr or less for 2 hours to remove an unreacted base material (unreacted monomer), an oligomer having a low molecular weight, and byproduct water. As a result, a PBSAT resin having a molecular weight (Mw) of 100,000 was obtained.

### (2) Preparation of masterbatch

1.5 g of phthalocyanine green as a colorant was added to 100 g of the PBSAT resin having a molecular weight (Mw) of 100,000, and the two materials were mixed in a melt extruder (TEM 35B twin-screw extruder) set at 180 °C. Strands thus obtained were cooled in water and then cut to obtain a masterbatch.

### (3) Preparation of monofilament yarn

25 kg of the PBSAT resin prepared in the method (1) and the masterbatch for coloration in an amount prepared in the method (2) were mixed and then spun at a temperature of 230 °C. In this case, a total drawing ratio was adjusted by adjusting a primary drawing ratio and a secondary drawing ratio to obtain monofilament yarn having a diameter of 0.285 mm (No.3).

### Example 2

Monofilament yarn having a diameter of 0.165 mm (No.1) was obtained in the same manner as in Example 1, except that 3.0 g of carbon black was used as a colorant instead of phthalocyanine green upon preparation of a masterbatch.

### Example 3

Monofilament yarn having a diameter of 0.405 mm (No.6) was obtained in the same manner as in Example 1, except that 2.5 g of phthalocyanine blue was used as a colorant instead of phthalocyanine green upon preparation of a masterbatch.

### Example 4

Monofilament yarn having a diameter of 0.37 mm (No.5) was obtained in the same manner as in Example 1, except that 1.5 g of an iron oxide was used as a colorant instead of phthalocyanine green upon preparation of a masterbatch.

### Example 5

Monofilament yarn having a diameter of 0.47 mm (No.8) was obtained in the same manner as in Example 1, except that 2.0 g of triphenylmethane was used as a colorant instead of phthalocyanine green upon preparation of a masterbatch.

### Comparative Example 1

Monofilament yarn having a diameter of 0.285 mm (No.3) was obtained in the same manner as in Example 1, except that a PBS resin (4560C commercially available from S-Enpol Co. Ltd) was used instead of a PBSAT resin upon preparation of monofilament yarn.

### Comparative Example 2

Monofilament yarn having a diameter of 0.165 mm (No.1) was obtained in the same manner as in Example 2, except that a PBS resin (4560C commercially available from S-Enpol Co. Ltd) was used instead of a PBSAT resin upon preparation of monofilament yarn.

### Evaluation

For the monofilament yarn according to Examples 1 to 5 and Comparative Examples 1 and 2, strengths were measured up to 1/1,000 g every 0.1 seconds using a constant speed extension-type tensiometer (Instron 3365, USA) by a KS K 0412 (2005) method. The results and drawing ratios upon spinning are shown in the following Table 1.

**[Table 1]**

| | Diameter No. | Drawing ratio | Reference strength (kgf) | Measured strength (kgf) |
|---|---|---|---|---|
| Example 1 | 3 | 7.5 | 3.0 | 3.1 |
| Example 2 | 1 | 8.0 | 0.7 | 1.2 |
| Example 3 | 6 | 7.0 | 5.8 | 6.1 |
| Example 4 | 5 | 7.2 | 4.85 | 5.2 |
| Example 5 | 8 | 6.8 | 7.85 | 7.9 |
| Comparative Example 1 | 3 | 7.0 | 3.0 | 2.3 |
| Comparative Example 2 | 1 | 7.2 | 0.7 | 0.4 |

Values exceeding reference strength are obtained in Examples 1 to 5, whereas monofilament yarn of the comparative examples exhibits a value lower than reference strength. That is, the resin composition according to the present invention has improved strength even after coloration, compared to an existing biodegradable resin, and may be used to manufacture a fishing net because values exceeding strength required for monofilament yarn of each diameter number are obtained.

## Claims

1. A biodegradable resin composition comprising a colorant that is included at 0.005 to 0.015 parts by weight with respect to 100 parts by weight of a poly(butylene succinate-co-adipate-co-terephthalate) (PBSAT) resin.

2. The biodegradable resin composition according to claim 1, wherein the colorant is one or more selected from the group consisting of phthalocyanine green, carbon black, phthalocyanine blue, an iron oxide, and triphenylmethane.

3. The biodegradable resin composition according to claim 1, the colorant is provided in the form of a masterbatch having a structure that includes a colorant and a biodegradable resin which covers the colorant.

4. The biodegradable resin composition according to claim 1, the PBSAT resin has a molecular weight (Mw) in a range of 100,000 to 200,000.

5. The biodegradable resin composition according to claim 1, the PBSAT resin includes a residue of succinic acid:adipic acid:phthalic acid in a range of 70 to 90:5 to 15:5 to 15 mol%.

6. Monofilament yarn manufactured from the resin composition of any one of claims 1 to 5.

7. A fishing net manufactured using a part or all of the monofilament yarn of claim 6.
